(19) **Europäisches Patentamt**
**European Patent Office**
**Office européen des brevets**

(11) **EP 2 136 480 A2**

(12) **EUROPEAN PATENT APPLICATION**

(43) Date of publication:
**23.12.2009 Bulletin 2009/52**

(51) Int Cl.:
***H04B 7/06*** (2006.01) ***H04B 7/08*** (2006.01)

(21) Application number: **09006762.0**

(22) Date of filing: **19.05.2009**

(84) Designated Contracting States:
**AT BE BG CH CY CZ DE DK EE ES FI FR GB GR HR HU IE IS IT LI LT LU LV MC MK MT NL NO PL PT RO SE SI SK TR**

(30) Priority: **19.06.2008 US 73916**
**15.08.2008 US 192678**

(71) Applicant: **Broadcom Corporation**
**Irvine, CA 92617 (US)**

(72) Inventor: **Ahmadreza, Rofougaran**
**92657 Newport Coast, CA (US)**

(74) Representative: **Jehle, Volker Armin**
**Bosch Jehle**
**Patentanwaltsgesellschaft mbH**
**Flüggenstrasse 13**
**80639 München (DE)**

(54) **Method and system for transmit diversity for chip-to-chip communications**

(57)    Aspects of a method and system for transmit diversity for chip-to-chip communications may include transmitting a plurality of signals generated in accordance with a transmission diversity protocol via a plurality of transmit antennas integrated in/on a first chip. The plurality of signals may be received at a second chip, the second chip comprising one or more receive antennas. One or more received signals may be processed in accordance with the transmission diversity protocol. Modulation frequencies at the first chip and/or demodulation frequencies at the second chip may be received via a communication device comprising the first chip and/or the second chip. The modulation and the demodulation frequencies may be received on a link operating in a frequency band that is different from one or more receive frequencies used for the receiving of the plurality of signals, and the frequency band of the link may be an ISM band.

FIG. 1

**Description**

CROSS-REFERENCE TO RELATED APPLICATIONS/
INCORPORATION BY REFERENCE

This application makes reference to, claims priority to, and claims the benefit of United States Provisional Application Serial Number 61/073,916, filed on June 19, 2008.

The above referenced application is hereby incorporated herein by reference in its entirety.

FIELD OF THE INVENTION

Certain embodiments of the invention relate to signal processing for communication systems. More specifically, certain embodiments of the invention relate to a method and system for transmit diversity for chip-to-chip communications.

BACKGROUND OF THE INVENTION

Electronic communication has become prolific over the last decade. While electronic communication was initially limited to the desktop, recent trends have been to make communications, media content and the Internet available anytime, anywhere and, increasingly, on any device. Already now, it is quite common to find mobile devices such as cellular phones or Personal Digital Assistants (PDAs) that incorporate a large range of communication technologies and associated software. For example, fully-featured web-browsers, email clients, MP3 players, instant messenger software, and Voice-over-IP may all be found on some recent devices. The various communications may occur at different transmission and/or reception bands.

Given the varying demands of users, service providers and device manufacturers have to support media content comprising voice, video and/or data compliant with many different communication standards, specifications and/or data formats.

Further limitations and disadvantages of conventional and traditional approaches will become apparent to one of skill in the art, through comparison of such systems with some aspects of the present invention as set forth in the remainder of the present application with reference to the drawings.

BRIEF SUMMARY OF THE INVENTION

A method and/or system for transmit diversity for chip-to-chip communications, substantially as shown in and/or described in connection with at least one of the figures, as set forth more completely in the claims.

According to an aspect, a method for processing communication signals is provided, the method comprising:

in a single device:

transmitting a plurality of signals generated in accordance with a transmission diversity protocol via a plurality of transmit antennas integrated in/on a first chip;

receiving said plurality of signals at a second chip, said second chip comprising one or more receive antennas; and

processing one or more received signals in accordance with said transmission diversity protocol.

Advantageously, the method further comprises receiving modulation frequencies at said first chip and/or demodulation frequencies at said second chip via a communication device comprising said first chip and/or said second chip.

Advantageously, the method further comprises receiving said modulation frequencies and said demodulation frequencies on a link operating in a frequency band that is different from one or more receive frequencies used for said receiving of said plurality of signals.

Advantageously, said frequency band of said link is an ISM frequency band.

Advantageously, the method further comprises receiving said modulation frequencies and said demodulation frequencies on a link operating in a frequency band different from one or more transmit frequencies used for said transmitting of said plurality of signals.

Advantageously, said frequency band of said link is a Bluetooth or IEEE 802.11 Wireless LAN link.

Advantageously, said transmitted plurality of signals are in the 60 GHz band.

Advantageously, said transmission diversity protocol comprises Alamouti space-time coding protocol.

Advantageously, the method further comprises reducing average fading of said one or more received signals by said processing in accordance with said transmission diversity protocol.

Advantageously, the method further comprises processing a plurality of said one or more of said received plurality of signals using receiver diversity at said second chip.

According to an aspect, a system for processing communication signals comprises:

two or more circuits for use in a single communication device, enabled to:

transmit a plurality of signals generated in accordance with a transmission diversity protocol via a plurality of transmit antennas integrated in/on a first chip;

receive said plurality of signals at a second chip, said second chip comprising one or more receive antennas; and

process one or more received signals in accordance with said transmission diversity protocol.

Advantageously, said two or more circuits receive modulation frequencies at said first chip and/or demodulation frequencies at said second chip via a communication device comprising said first chip and/or said second chip.

Advantageously, said two or more circuits receive said modulation frequencies and said demodulation frequencies on a link operating in a frequency band that is different from one or more receive frequencies used for said receiving of said plurality of signals.

Advantageously, said frequency band of said link is an ISM frequency band.

Advantageously, said two or more circuits receive said modulation frequencies and said demodulation frequencies on a link operating in a frequency band different from one or more transmit frequencies used for said transmitting of said plurality of signals.

Advantageously, said frequency band of said link is a Bluetooth or IEEE 802.11 Wireless LAN link.

Advantageously, said transmitted plurality of signals are in the 60 GHz band.

Advantageously, said transmission diversity protocol comprises Alamouti space-time coding protocol.

Advantageously, said two or more circuits reduce average fading of said one or more received signals by said processing in accordance with said transmission diversity protocol.

Advantageously, said two or more circuits process a plurality of said one or more of said received plurality of signals using receiver diversity at said second chip.

These and other advantages, aspects and novel features of the present invention, as well as details of an illustrated embodiment thereof, will be more fully understood from the following description and drawings.

BRIEF DESCRIPTION OF SEVERAL VIEWS OF THE DRAWINGS

FIG. 1 is a diagram illustrating an exemplary wireless communication system, in accordance with an embodiment of the invention.
FIG. 2A is a circuit diagram illustrating an exemplary on-chip repeater architecture, in accordance with an embodiment of the invention.
FIG. 2B is a diagram illustrating an exemplary chip-to-chip transmit diversity system, in accordance with an embodiment of the invention.
FIG. 3 is a flow chart illustrating an exemplary transmit diversity process, in accordance with an embodiment of the invention.

DETAILED DESCRIPTION OF THE INVENTION

Certain embodiments of the invention may be found in a method and system for transmit diversity for chip-to-chip communications. Aspects of a method and system for transmit diversity for chip-to-chip communications may comprise transmitting a plurality of signals generated in accordance with a transmission diversity protocol via a plurality of transmit antennas integrated in/on a first chip. The plurality of signals may be received at a second chip comprising one or more receive antennas. One or more received signals may be processed in accordance with the transmission diversity protocol.
Modulation frequencies at the first chip and/or demodulation frequencies at the second chip may be received via a communication device comprising the first chip and/or the second chip. The modulation frequencies and the demodulation frequencies may be received on a link operating in a frequency band that is different from one or more receive frequencies used for the receiving of the plurality of signals. The frequency band of the link may be an ISM frequency band. Similarly, the modulation frequencies and the demodulation frequencies may be received on a link operating in a frequency band that is different from one or more transmit frequencies used for the transmitting of the plurality of signals, and may be in an ISM frequency band. The transmitted plurality of signals may be in the 60 GHz band, and the transmission diversity protocol may be an Alamouti space-time coding protocol. Average fading of the one or more received signals may be reduced by the processing in accordance with the transmission diversity protocol. Receiver diversity at the second chip may be exploited by processing a plurality of the received signals from a plurality of the one or more receive antennas.

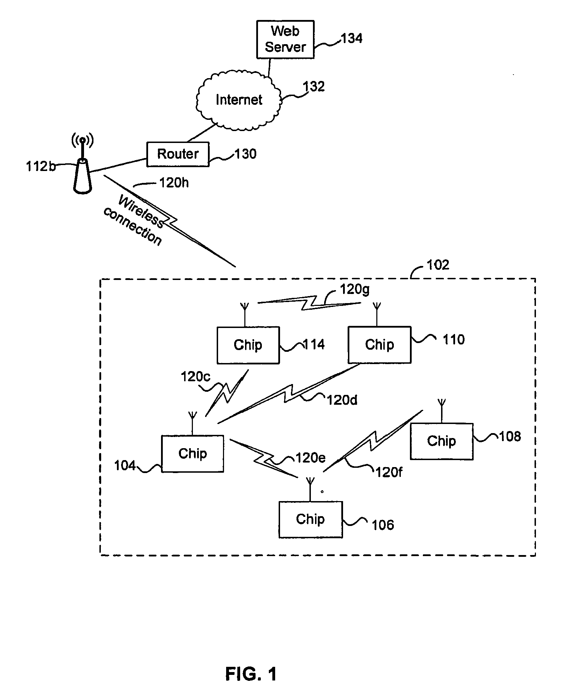

FIG. 1 is a diagram illustrating an exemplary wireless communication system, in accordance with an embodiment of the invention. Referring to FIG. 1, there is shown an access point 112b, a router 130, the Internet 132, a web server 134, a communication device 102 comprising chips 104, 106, 108, 110, and 114, wireless connections 120c, 120d, 120e, 120f, 120g, and 120h.
The communication device 102 may comprise suitable logic, circuitry and/or code that may be enabled to receive, process, and transmit radio signals. The chips 104, 106, 108, 110, and 114 in communication device 102 may be substantially similar.
The chips 104, 106, 108, 110, and 114 may comprise suitable logic, circuitry and/or code that may be enabled to provide wireless communication. In accordance with various embodiments of the invention, the chips 104, 106, 108, 110, and 114 may be arranged and/or configured so as to form a mesh network. Each chip may be enabled to communicate with one or more other chips and/or other components of the communication device 102. In some instances, the communication device 102 may be communicating with other network components, for example chip 114 may be communicatively coupled to the access point 112b via the wireless connection 120h. A plurality of exemplary wireless connections between the chips 104, 106, 108, 110, and 114 may be illustrated by the wireless connections 120c, 120d, 120e, 120f, 120g, and 120h.

The access point 112b may comprise suitable logic, circuitry and/or code that may be enabled to transmit and receive radio frequency signals for communication of information comprising voice, video and/or data, for example, via the chip 114. The access point 112b may also be enabled to communicate via a wired network, for example, with the router 130. The communication device 102 and/or the chips 104, 106, 108, 110, and 114 and the access point 112b may be compliant with one or more communication standard, for example, Wireless LAN (WLAN, IEEE 802.11) or Bluetooth.

The router 130 may comprise suitable logic, circuitry and/or code that may be enabled to route communication between, for example, a wide area network (WAN) and/or a LAN or WLAN. The access point 112b and the Internet 132 may be coupled to the router 130. In this regard, the router 132 may be enabled to route traffic between the Internet and devices communicatively coupled to a WLAN via the access point 112b.

The Internet 132 may comprise various devices comprising suitable logic, circuitry and/or code that may enable interconnection and exchange of data between a plurality of communication devices communicatively coupled thereto. The web server 134 may comprise suitable logic, circuitry and/or code that may be communicatively coupled to the Internet 132 and may be enabled to provide web-based services to various communication devices that may be communicatively coupled to it. For example, the web server 134 may host one or more web sites that may be accessible via the communication devices.

In accordance with various embodiments of the invention, it may be desirable that the chips 104, 106, 108, 110, and 114 may maintain a plurality of communication session concurrently. In an exemplary embodiment of the invention, a plurality of wireless connections 120c, 120d, 120e, 120f, 120g, and 120h may be active an any given time instant. The chip 106 may receive data via wireless connection 120e and it may be desirable to forward this data to chip 108, via wireless connection 120f. In these instances, better performance and more optimal operation may be achievable if the wireless connection 120e and the wireless connection 120f may not be operated on the same transmission frequency, because it may reduce interference. This may be achieved by using repeater logic, circuitry and/or code in the chips. Furthermore, performance may be improved in some instances by employing multiple antenna transmission protocols, for example transmission diversity.

The communication device 102 may be implemented on a Printed Circuit Board (PCB), comprising chips 104, 106, 108, 110, and 114.

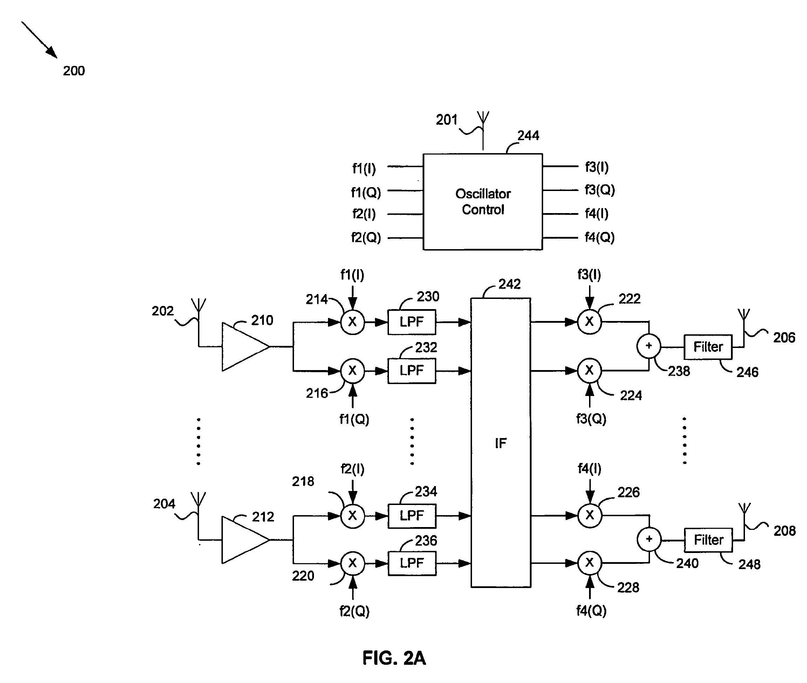

FIG. 2A is a circuit diagram illustrating an exemplary on-chip repeater architecture 200, in accordance with an embodiment of the invention. Referring to FIG. 2A, there is shown an oscillator control 244, a plurality of antennas comprising antennas 201, 202, 204, 206, and 208; and a plurality of amplifiers 210 and 212. FIG. 2A also illustrates a plurality of multipliers comprising multipliers 214, 216, 218, 220, 222, 224, 226 and 228; a plurality of low-pass filters (LPFs) comprising LPF 230, 232, 234, and 236; and a plurality of filters comprising filters 246 and 248. The exemplary repeater architecture 200 may further comprise a processing block 242 and a plurality of adders comprising adders 238 and 240 may be illustrated. There is also shown the oscillator signals f1 (I), f1 (Q), f2(I), f2(Q), f3(I), f3(Q), f4(I), and f4(Q), which may communicatively couple the oscillator control 244 to the plurality of multipliers 214 through 228. One or more of the exemplary components illustrated in FIG. 2A may be utilized without departing from the scope of various embodiments of the invention.

The oscillator control 244 may comprise suitable logic, circuitry and/or code that may be enabled to receive and transmit radio signals, for example from a control point 102, and may generate a plurality of oscillator frequencies that may be enabled to control the transmit modulation frequencies and receive demodulation frequencies at the multipliers 214, 216, 218, 220, 222, 224, 226, and 228, for example. In many instances, the oscillator control may be integrated within a chip comprising a repeater structure. The repeater 200 may, for example, be substantially similar to the chip 104. In this instance, the antenna 201 may receive signals from the chip 114 via the wireless connection 120c. The one or more antennas 202 to 204 may comprise suitable logic, circuitry and/or code that may be enabled to receive a data signal. In accordance with various embodiments of the invention, the antennas 202 through 204 may, for example, receive the wireless connection 120c from chip 114. In some instances, there may a plurality of antennas, as illustrated in FIG. 2A. In another embodiment of the invention, there may be one receive antenna, for example, antenna 202.

The signal received at antennas 202 through 204 via, for example, wireless connection 120c, may be communicatively coupled to amplifiers 210 through 212. The amplifiers 210 and 212 may be similar, and may comprise suitable logic, circuitry, and or code that may be enabled to generate a low-noise amplified signal at the output that may be proportional to the input signal. The output signal of amplifier 210 may be communicatively coupled to the multipliers 214 and the multiplier 216. The multiplier 214 may demodulate the received signal to an intermediate frequency by multiplying it with an in-phase carrier frequency f1(I). Hence, the multiplier 214 may generate a signal comprising the in-phase component of the received signal. Similarly, the multiplier 216 may generate a signal comprising the quadrature component of the received signal, by multiplying the received signal with a quadrature carrier frequency f1(Q).

The low-pass filters 230 and 232 may be enabled to remove or significantly attenuate some undesirable frequencies. An intermediate in-phase frequency component from the output of the filter 230 may be communicatively coupled to the processing block 242. Similarly, an intermediate quadrature frequency component from the output of the filter 232 may be communicatively coupled to the processing block 242. Similarly, an intermediate in-phase frequency component and an intermediate quadrature frequency component may be generated from a signal received at antenna 204, via the multipliers 218 and 220, and the LPFs 234 and 236. In accordance with various embodiments of the invention, the transmit signals at the transmit antennas 206 through 208 may comply with multiple antenna transmission protocols, for example, beamforming, MIMO, or transmit diversity.

The processing block 242 may comprise suitable logic, circuitry and/or code that may be enabled to process a plurality of intermediate frequency and/or baseband signals. For example, the processing block 242 may be operable to process the received signals for transmission via a plurality of antennas 206 through 208 in accordance with transmission diversity protocols, for example space-time coding (STC). The processing block 242 may generate an in-phase and a quadrature signal component for modulation and transmission via one or more transmit antennas. For example, a first in-phase signal component may be coupled from the processing block 242 to the multiplier 222. The multiplier 222 may generate an in-phase RF signal component by multiplication of the signal from the processing block 242 and an in-phase carrier frequency f3(I). Similarly, a quadrature RF signal component may be generated in multiplier 224 by multiplication of a signal from the processing block 242 and a quadrature RF signal component f3(Q). The in-phase RF signal and the quadrature RF signal may be added in the adder 238, to form a composite RF signal.

The filters, for example filter 246 may be enabled to attenuate undesirable frequencies, and the signal at the output of the filter 246 may be transmitted via antenna 206. Similarly, other intermediate frequency in-phase and quadrature signal components may be generated at the processing block 242, and multiplied with in-phase and quadrature carrier frequencies at, for example, the multipliers 226 and 228, to generate a composite RF signal at the output of the adder 240 for transmission via antenna 208 and filter 248. In accordance with various embodiments of the invention, the adders 238 and 240 may perform a subtraction or an addition, and may weigh the signal components to be processed. In some instances, it may be desirable to adjust the phases of f1(I), f1(Q), f2(I), f2(Q), f3(I), f3(Q), f4(I), and f4(Q) to allow desirable signal selection.

By choosing desirable in-phase and quadrature modulation frequencies, for example f3(I) and f3(Q), the transmission frequency may be chosen differently from the receiver frequencies, thereby reducing interference. Based on network topology and/or one or more performance metrics, the oscillator control 244 may generate a desirable set of demodulation frequencies and modulation frequencies. In accordance with various embodiments of the invention, the above architecture may be used to receive one or more RF signals and re-transmit them at one or more RF frequencies, which may be different from the receive frequencies. For example, the transmit frequencies and/or receive frequencies may be adjusted to minimize interference with nearby radio transmitters.

In accordance with various embodiments of the invention, multiple antennas may permit multiple antenna processing of received signals, for example for transmit diversity. In some instances, the desired modulation frequencies and/or desired demodulation frequencies may be communicated to the oscillator control 244 via an out-of-band link, for example WLAN or Bluetooth, that may be received at antenna 201.

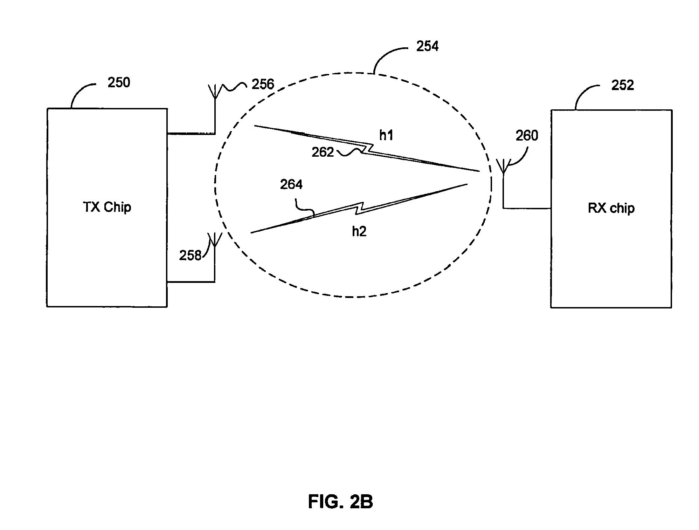

FIG. 2B is a diagram illustrating an exemplary chip-to-chip transmit diversity system, in accordance with an embodiment of the invention. There is shown a transmitter chip 250 communicatively coupled to antennas 256 and 258, a wireless channel 254, and a receiver chip 252 communicatively coupled to the antenna 260. The wireless channel 254 may comprise communication paths 262 and 264. Associated with communications path 262 may be a complex channel coefficient $h_1$, and associated with communications path 264 may be a complex channel coefficient $h_2$.

In wireless systems, the communication paths of a wireless channel 254 may be subject to fading, that is, the channel coefficients may vary with time and/or frequency. For example, the channel coefficient $h_1$ of communications path 262 may vary as a function of time and/or frequency, for example. When the channel coefficient drops strongly, the signal power received at antenna 260 may be very low, and the channel may be in a "deep fade." Diversity in wireless systems may be used to combat fading. Transmit diversity may be used in systems with multiple transmit antennas and one or more receive antennas, for example as illustrated in FIG. 2C. To benefit from diversity of the channel, suitable design of the transmission signal may be utilized, to achieve independent fading along the communication paths from each transmission antenna to the one or more receive antennas. Such signal design may be referred to as space-time coding (STC) because the signal may be arranged and/or coded in time, and for each antenna (space-dimension). If the fading of the communication paths may be independent, a transmit diversity order equal to the number of transmit antennas may be achieved. In the case of multiple receive antennas, receive diversity may be achieved additionally.

In accordance with an embodiment of the invention, any transmit diversity protocol may be applied at the transmitter chip 250, for a plurality of transmit antennas. An exemplary transmit protocol for two transmit antennas 256 and 258 may be illustrated with respect to FIG. 2C, whereas two transmit symbols may be transmitted in different combinations over different antennas. This protocol may be referred to as Alamouti STC. In accordance with an embodiment of the invention, two symbols $s_1$ and $s_2$ may be transmitted over the antennas 256 and 258, such that a first time instant, $s_1$ may be transmitted over antenna 256 and $s_2$ may be transmitted across antenna 258. At a second time instant, $-s_2^*$ may be transmitted over antenna 256 and $s_2^*$ may be transmitted over antenna 258. The symbol $.^*$ may denote the complex conjugate. If the received signal at antenna 260 may be $y_1$ at time instant 1, and $y_2$ at time instant 2, the received signals $y_1$ and $y_2$ may be suitably combined to recover $s_1$ and $s_2$ at the receiver chip 252. The described transmission protocol may generate a higher average receiver Signal-to-Noise ratio (SNR) compared to a single transmit antenna, when the communication paths 262 and 264 may exhibit independent fading, and the receiver chip 252 may possess sufficient channel state information about the wireless channel 254 for decoding.

The Alamouti STC protocol may be an exemplary transmission diversity protocol that may be utilized because it may not require the knowledge of the channel coefficients $h_1$ and $h_2$ at the transmitter. The various embodiments of the invention, however, may not be limited to the application of STC and any particular transmission diversity protocol may be utilized.

The antennas 256 and 258 may be embedded inside the package of the chip 250, or on the package of the transmitter chip 250. Similarly, one or more receive antennas, for example antenna 260, may be embedded inside the package of the receiver chip 252, or on the package of the receiver chip 252. As illustrated in FIG. 1 and FIG. 2A, a chip may be enabled to perform transmitter and/or receiver functionality, and may thus comprise transmit antennas and/or receive antennas.

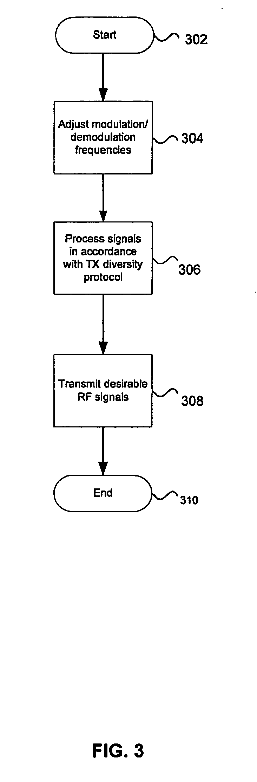

FIG. 3 is a flow chart illustrating an exemplary transmit diversity process, in accordance with an embodiment of the invention. The exemplary steps may begin with start step 302. In step 304, the oscillator control 244 may adjust the modulation and demodulation frequencies of the repeater architecture 200 via the in-phase and quadrature carrier frequencies. In some instances, the frequency selection may be based on some performance measure, in other instances, the frequency selection may be made in a centralized manner directly at, for example, the control point 102. By setting the demodulation and modulation frequencies to desirable values, the transmission and/or reception frequencies may be set to desirable values. In some instances, the transmission frequencies may be different from the reception frequencies. In step 306, the signal to be transmitted may be prepared in the processing block 242 in accordance with a transmission diversity protocol, for example the Alamouti STC protocol described in FIG. 2B. In step 308, the intermediate frequency signal generated according to a transmission diversity protocol generated in step 306 may be modulated to radio frequency and transmitted, for example over the transmit antennas 256 and 258.

In accordance with an embodiment of the invention, a method and system for transmit diversity for chip-to-chip communications may comprise transmitting a plurality of signals generated in accordance with a transmission diversity protocol via a plurality of transmit antennas of a first chip, for example via antennas 256 and 258 of chip 250. The plurality of signals may be received at a second chip, for example via a wireless channel 254 comprising one or more communication paths 262 and 264, the second chip comprising one or more receive antennas 260. One or more received signals, for example the sum of the signals received through the communication paths 262 and 264 as illustrated in FIG. 2B, may be processed in accordance with the transmission diversity protocol.

Modulation frequencies at the first chip and/or demodulation frequencies at the second chip may be received via a communication device comprising the first chip and/or the second chip. For example, the transmitter chip 250 and the receiver chip 252 may be on a PCB that may be part of a communication device, also enabled to communicate via out-of-band links. The modulation frequencies and the demodulation frequencies may be received on a link operating in a frequency band different from one or more receive frequencies used for the receiving of the plurality of signals, and the frequency band of the link may be an ISM band, for example similar to Bluetooth or IEEE 802.11 Wireless LAN bands. Similarly, the modulation frequencies and the demodulation frequencies may be received on a link operating in a frequency band that may be different from one or more transmit frequencies used for the transmitting of the plurality of signals, and may be in an ISM frequency band. The transmitted plurality of signals, for example via antennas 256 and 258, may be in the 60 GHz band, and the transmission diversity protocol may be an Alamouti space-time coding protocol, as described with respect to FIG. 2B. Average fading of the one or more received signals may be reduced by the processing in accordance with the transmission diversity protocol. Receiver diversity at the second chip may be exploited by processing a plurality of the received signals from a plurality of the one or more receive antennas.

Another embodiment of the invention may provide a machine-readable storage, having stored thereon, a computer program having at least one code section executable by a machine, thereby causing the machine to perform the steps as described herein for a method and system for transmit diversity for chip-to-chip communications.

Accordingly, the present invention may be realized in hardware, software, or a combination of hardware and software. The present invention may be realized in a centralized fashion in at least one computer system, or in a distributed fashion where different elements are spread across several interconnected computer systems. Any kind of computer system or other apparatus adapted for carrying out the methods described herein is suited. A typical combination of hardware and software may be a general-purpose computer system with a computer program that, when being loaded and executed, controls the computer system such that it carries out the methods described herein.

The present invention may also be embedded in a computer program product, which comprises all the features enabling the implementation of the methods described herein, and which when loaded in a computer system is able to carry out these methods. Computer program in the present context means any expression, in any language, code or notation, of a set of instructions intended to cause a system having an information processing capability to perform a particular function either directly or after either or both of the following: a) conversion to another language, code or notation; b) reproduction in a different material form.

While the present invention has been described with reference to certain embodiments, it will be understood by those skilled in the art that various changes may be made and equivalents may be substituted without departing from the scope of the present invention. In addition, many modifications may be made to adapt a particular situation or material to the teachings of the present invention without departing from its scope. Therefore, it is intended that the present invention not be limited to the particular embodiment disclosed, but that the present invention will include all embodiments falling within the scope of the appended claims.

## Claims

1. A method for processing communication signals, the method comprising:

   in a single device:

      transmitting a plurality of signals generated in accordance with a transmission diversity protocol via a plurality of transmit antennas integrated in/on a first chip;
      receiving said plurality of signals at a second chip, said second chip comprising one or more receive antennas; and
      processing one or more received signals in accordance with said transmission diversity protocol.

2. The method according to claim 1, comprising receiving modulation frequencies at said first chip and/or demodulation frequencies at said second chip via a communication device comprising said first chip and/or said second chip.

3. The method according to claim 2, comprising receiving said modulation frequencies and said demodulation frequencies on a link operating in a frequency band that is different from one or more receive frequencies used for said receiving of said plurality of signals.

4. The method according to claim 3, wherein said frequency band of said link is an ISM frequency band.

5. The method according to claim 2, comprising receiving said modulation frequencies and said demodulation frequencies on a link operating in a frequency band different from one or more transmit frequencies used for said transmitting of said plurality of signals.

6. The method according to claim 5, wherein said frequency band of said link is a Bluetooth or IEEE 802.11 Wireless LAN link.

7. A system for processing communication signals, the system comprising:

   two or more circuits for use in a single communication device, enabled to:

      transmit a plurality of signals generated in accordance with a transmission diversity protocol via a plurality of transmit antennas integrated in/on a first chip;
      receive said plurality of signals at a second chip, said second chip comprising one or more receive antennas; and
      process one or more received signals in accordance with said transmission diversity protocol.

8. The system according to claim 7, wherein said two or more circuits receive modulation frequencies at said first chip and/or demodulation frequencies at said second chip via a communication device comprising said first chip and/or said second chip.

9. The system according to claim 8, wherein said two or more circuits receive said modulation frequencies and said demodulation frequencies on a link operating in a frequency band that is different from one or more receive frequencies used for said receiving of said plurality of signals.

10. The system according to claim 9, wherein said frequency band of said link is an ISM frequency band.

FIG. 1

**FIG. 2A**

EP 2 136 480 A2

FIG. 2B

**FIG. 3**

**REFERENCES CITED IN THE DESCRIPTION**

**Patent documents cited in the description**

- US 61073916 B